# EUROPEAN PATENT APPLICATION

(11) **EP 1 754 845 A1**
(43) Date of publication of application: **21.02.2007**
(21) Application number: 05754702.8
(22) Date of filing: 10.06.2005
(51) Int. Cl.: E04H 3/28, B60P 3/025

(54) **MOBILE STAGE**

(30) Priority: 11.06.2004 ES 200401413 U
(71) Applicant: Aragonesa de Carpas S.L., 50006 Zaragoza (ES)
(72) Inventor: SADA CASABÓN, Jesús, E-50006 Zaragoza (ES)
(74) Representative: Schäfer, Matthias W.
(86) International application number: PCT/ES2005/000330
(87) International publication number: WO 2005/124065

(57) **Abstract**

Mobile stage system of the type used for any type of public event such as festivities, concerts, plays, meetings or conferences, **characterised in that** it consists of two equal and opposing platforms mounted on wheels that, in order to transport them are connected directly to the tractor unit of a truck by means of the fifth wheel, all of which can easily be connected together to form a large structure that can be used to host major events, complying with the most stringent safety regulations and equipping the structure with the corresponding supports for fitting lights, speakers and other elements that are required at events of this type, the stage system also being covered by a folding structure, forming a compact stage system that can be used in a wide variety of ways.

## Description

The present description relates, as its title indicates, to a mobile stage system of the type used for any type of public event such as festivities, concerts, plays, meetings or conferences, characterised in that it consists of two platforms on equal and opposing wheels that, in order to transport it are connected directly to the tractor unit of a truck by means of the fifth wheel, all of which can easily be connected together to form a large structure that can be used to host major events, complying with the most stringent safety regulations and equipping the structure with the corresponding supports for fitting lights, speakers and other elements that are required at events of this type, the stage system also being covered by a folding structure, forming a compact stage system that can be used in a wide variety of ways.

The fact that mobile stage systems and platforms are support structures used for conducting any public activity, be it cultural, sporting or political, is in the public domain.
Their use ensures that any public event can be held in the most unlikely place such as streets, squares or parks, with some being fitted with covers protecting against wind and rain, these being ideal for outdoor events, although they can also be used in enclosed premises as they are, generally speaking, very easy to handle and very safe.
These stage systems or structures are mainly manufactured using metallic materials, and the base of the stage system is normally made of wood, with various blocks being connected together to form the base.

There are many known mobile stage systems at this moment in time. For example, Utility Model 9301385 presents a "folding mobile stage system" made up of a central part attached to a chassis that supports it. The sides are two liftable modules, and the roof can be lifted and folded. Although it is provided with means that protect it from wind and rain, it has a reduced capacity for hosting major events.

Another mobile stage system is described in Utility Model 9502495, which consists of a trailer forming three perfectly transportable, folding platforms fitted with feet that are used to support the unfolded platform. This mobile stage system can be used specifically for small events but lacks a roof structure, which thus makes it inappropriate for outdoor spaces when there is a risk of rain.

In addition, the completed mobile stage system shown in Utility Model 9703020 is made up of a trailer upon which are disposed three folding sheets made of a strong material supported on an extendable tubular structure. This has the same drawback as the previous example, in that it performs its function as a support base but lacks a roof structure, this being a major disadvantage, particularly when there is a risk of unsettled weather.

Another folding mobile stage structure is presented in Patent 95939950.2, based on two platforms that can be folded all the way along their central axis, and fitted with a folding mechanism, internal support feet that can also be folded and a frame with wheels.
As well as presenting a complicated and costly folding system, this stage system also lacks a roof structure.

Finally, we can refer to the trailer that can be folded in steps presented in Patent 96440025.3, which consists of a chassis fitted onto wheels supporting a platform that supports the various elements that make up the stage system, fitted with a roof to protect it from rain and a gallery with seats, all of it folding.
It is a stage system that can be used for any type of event, even outdoor ones, but it does present the drawback of accommodating only a limited number of people as it only has a small number of seats.

In order to solve the problems currently affecting this type of stage system, the inventive mobile stage system has been designed and essentially consists of two equal trailer platforms on wheels and which face each other in an inverted position so that an approximate gap of 13 metres should be left between them so that when unfolding the various structures that make up each platform they can be connected at the centre using linking elements to complete the formation of the stage system, the base of which, taking the dimensions of the respective platforms into consideration, can extend for an approximate total length of 18 metres.

The unfolding of the structure and its subsequent assembly is very easy and can be carried out by a small number of people and in a single day, a factor that is extremely important when taking the high cost of labour into consideration.
Each platform is equipped with the same elements but in an inverted arrangement to enable their linkage once they have been fully unfolded, the stage system being disposed with a fifth wheel for its coupling to the body of a truck, making it easy to transport by road.

In order to begin assembly it is essential that both platforms are separated by the aforementioned distance, the known methods employed for this operation being simple.

Each platform comprises a basic chassis upon which is assembled the stage system structure, which means that the first base sheet for the formation of the stage system is made up by the platform itself.
Upon the fixed platform and all the way along its length are disposed the boards that are subsequently used as a base for the stage system. The boards are fitted on the aforementioned beam sections and are positioned on top of each other and screwed together to prevent them from moving during transport.

These sheets are formed by a rectangular metallic frame consisting of beams of a length equivalent to the length dimensions of the platform, being disposed with fastening means at the bottom, the top part being covered by a wooden board approximately two metres wide.

Between the first base sheet for the stage system and the chassis is provided a hole for housing metal beams that remain in the folded position during transport.
The free space or chassis compartment consists of six fixed equidistant metal profile divisions, which have a length equivalent in terms of width to the platform itself, and which are provided with rotation devices on the ends. Thus, the divisions closest to the ends can be folded easily and without obstruction, the two central divisions being the ones that have a quick connection system so that they can be unfolded to the same length.
Each beam section is equipped with metallic feet that fix the position of the aforementioned beams on the ground once they have been unfolded, thereby securing the base of the stage system itself, providing it with various support points for the purpose of spreading the load it has to bear, the feet also being height adjustable in order to balance the structure in the event of the ground becoming uneven.

On its external side the platform is disposed with a metallic structure that forms a small roof made up of various sections connected to each other by a system of ties welded to brackets disposed all along its structure, the free ends being linked by fixing means to a rectangular section with a metallic structure with the same characteristics and with a length equivalent to the width dimensions of the platform.

These shorter sections are disposed with a system of sliding trusses, which remain grouped together during transport, housed in guides so that they can slide in said section. The trusses are comprised of a metallic structure that is lined with a waterproof fabric or canvas and their length is equivalent to the length dimensions of the platform. Subsequently this system of sliding trusses is used to constitute a folding roof that slides along guides to connect with the other opposing section in the central part.
It is a waterproof roof that provides protection against rain, and the sides can also be closed with the same material as the structure is provided with the elements necessary for it to be fitted, this also providing protection at the sides against strong winds as well as rain.

The aforementioned shortest sections are linked with others of the same characteristics but longer in length by means of a hinge system that is situated in a parallel position on the platform during transport and is secured in place by hydraulic cylinders to prevent it from moving. The hinge enables its rotation during assembly, its position thus being varied, in this case perpendicular to the platform on wheels.
All this structure is linked to a scissor system situated on the side end of the platform, the scissors being secured onto the platform at the bottom and onto the metallic structure at the top.
The scissors are made up of metal profiles connected at the middle by a pin. To allow them to be secured in position both scissors are disposed with a fixed part and another mobile part by means of a track situated in the bottom part and another on the top metallic structure.

The upward/downward action of the scissors is generated by the hydraulic cylinders situated at the longest ends of the platform and equipped with the requisite end-of-stroke devices and control systems in order to control the process sequence both automatically and manually.

The unfolding and assembly operations must be performed at the same time on the two platforms so that both structures are already linked before the structure is raised. The following steps must be observed in the assembly process therefore:
a) The platforms must be situated at the right distance for their subsequent assembly, and the ground must be as even as possible.
b) First of all, the folding beam sections housed in the chassis compartment must be unfolded, the sections corresponding to those of both ends being unfolded first, followed by the two closest to them and finally the two central ones, which are the same length once a quick connector has been attached to them. The corresponding feet and ties must also be unfolded at the same time as the various beam sections are unfolded, and must be fixed in position on the ground.
   These sections on both sides are unfolded at the same time so that once both have been unfolded they are fitted together and secured in place to form the structure for supporting the flooring or stage assembled at a later stage.
c) The metallic structure must then be unfolded and assembled. First of all the hydraulic cylinders that fix the internal sections parallel to the platform must be unlocked.
   These sections are disposed with a hinge that adopts a position perpendicular to the platform when rotated slowly. This operation is carried out on both ends and on the two platforms so that once they have been extended they are linked in the central part, thereby completing the assembly of the structure.
   A hoist built into the structure itself is used during this phase to pick up and move each floor sheet to its location so that the base of the stage system can be fitted.
   Once the stage system flooring has been fitted, the sound modules, lights, etc. can be fitted in comfort.
d) After all the installation operations have been conducted on the structure, the trusses can then be moved along their corresponding rails to form the roof, the trusses being moved in both structures at the same time and linked in the centre by linking devices.
e) The elevation of the structure requires the use of scissors powered by hydraulic cylinders and on both platforms at the same time.
f) The sides of the structure may be covered by canvas or a waterproof material in the event of heavy rain or strong gusts of wind.

The mobile stage system that is presented here contributes multiple advantages in comparison to the systems currently available, the most important of which is the fact that it presents the possibility of positioning a large mobile stage system in the required location.

Another advantage of the present invention is that the sound modules and lighting equipment can be incorporated onto the structure of the mobile stage system in a simple and effective way.

Another of the most important advantages of this mobile stage system is the speed with which the assembly/dismantling operations can be carried out, thanks to the provision of the necessary means on the elements that make up the structure.

Another added advantage is the possibility of assembling the stage system in any location as the structure is assembled on a platform on wheels and can thus be easily transported to the required location.

Finally, there is also the added advantage that the assembly/dismantling of the mobile stage system can be completed in a single working day in conjunction with the small number of people required to do this, thereby reducing costs significantly.

In order to better understand the object of the present invention, a preferential practical embodiment of said invention has been represented on the plan attached.

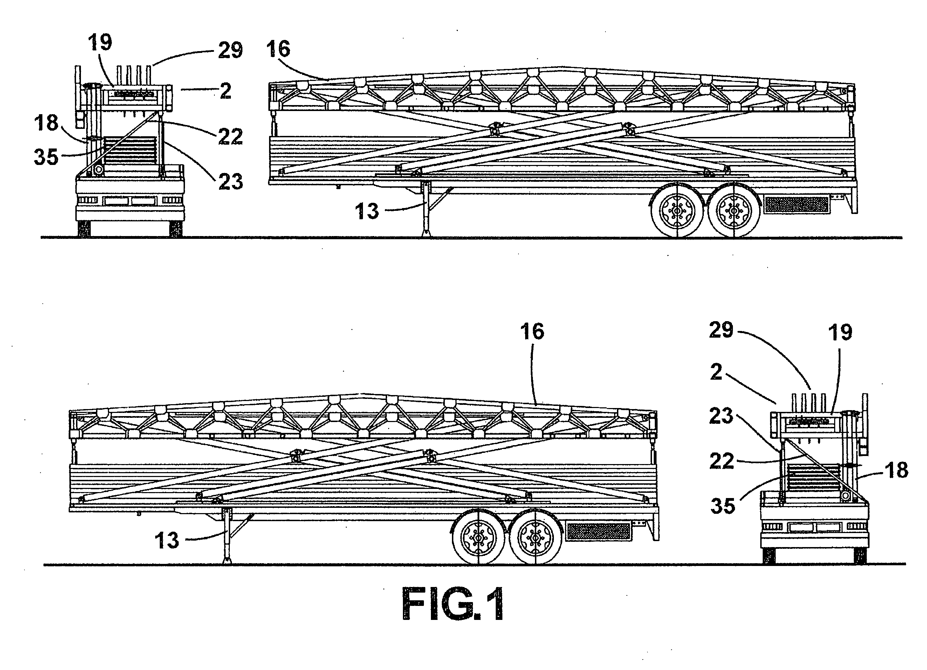

In said plan Figure 1 shows a side and rear view of the unit of both structures of the mobile stage system, assembled on the platform.

Figure 2 shows a side view and elevation of the assembly of the base structure of the stage system corresponding to the platform on the left side.

Figure 3 shows a side view and elevation of the assembly of the base structure of the stage system corresponding to the platform on the right side.

Figure 4 shows the assembly of the metallic base of the mobile stage system between both platforms.

Figure 5 shows the assembly of the top structure of the mobile stage system between both platforms.

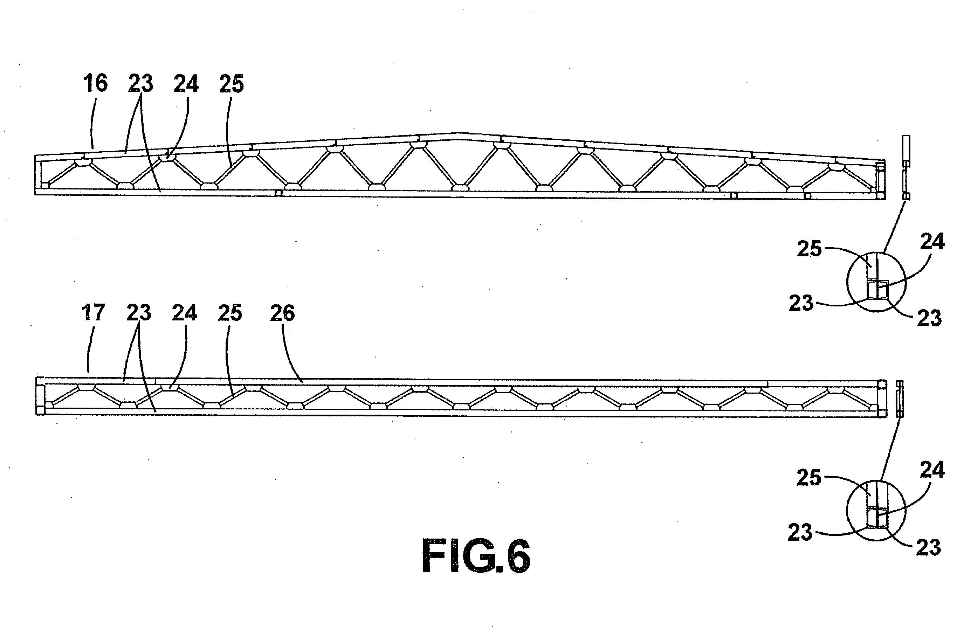

Figure 6 shows a front and side view of the friezes that make up the top metallic structure.

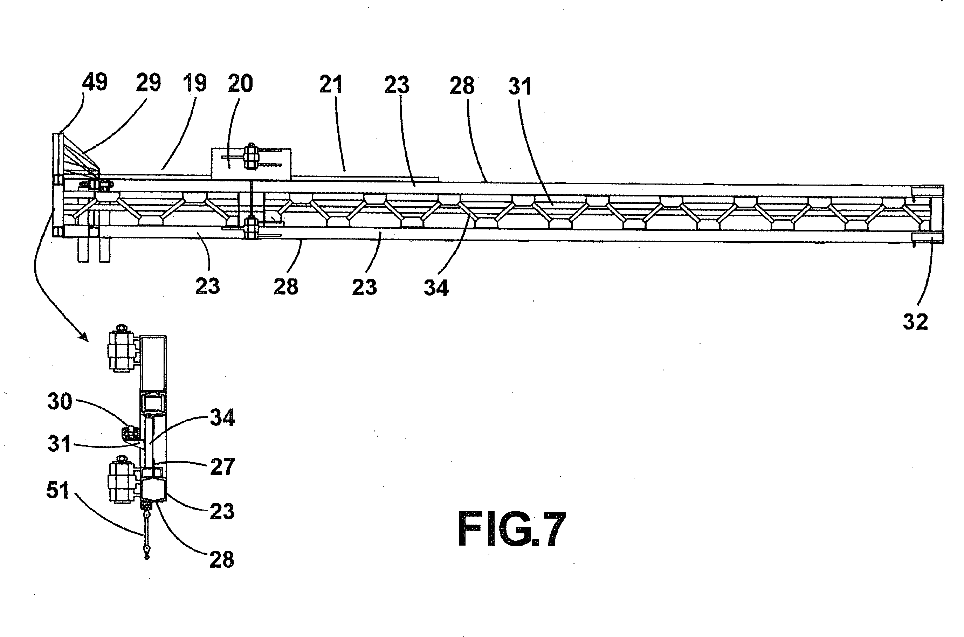

Figure 7 shows a front and side view of the hinged friezes that make up the top metallic structure.

Figure 8 shows the assembly of the flooring of the stage system by means of a hoist housed in the top structure of the mobile stage system.
Figure 9 shows a detailed view of the sheet that forms the flooring of the stage system.

Figure 10 shows a view of the elevation of the structure by means of scissors powered by hydraulic cylinders.

The mobile stage system that is the object of the present invention presented herein essentially consists of, as can be seen in the plan attached, two platforms on wheels that can be transported on a truck, one corresponding to the left side (1), and the other opposing it and in an inverted position, corresponding to the right side (2).

Both the platform (1) and the platform (2) are disposed with the same elements. Thus, in order to make it easier to order and develop the different elements that make it up, a single explanation shall be provided.
Figure 1 shows a side and rear view of both platforms in a state of transport, without any element of the structure having been unfolded. It is a general view designed to aid understanding of the following explanation:

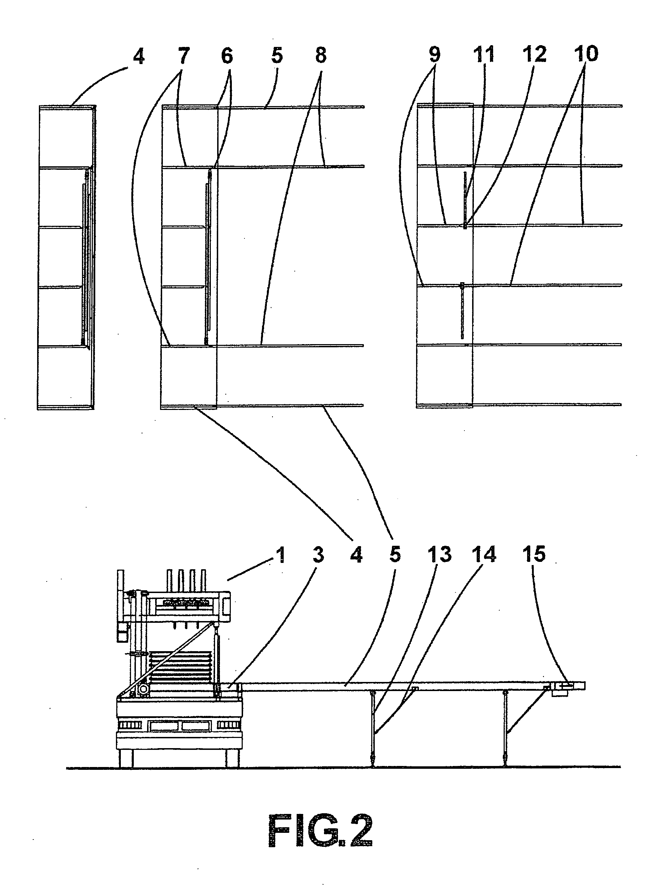

Figure 2 shows the unfolding of the structure that forms the base of the stage system flooring, and consists of a cavity (3) located between the fixed platform and the chassis of the platform itself, being made up of six fixed metal profile divisions, of different sizes and distributed at equidistant distances and located in the following way:
   At both ends, two fixed divisions (4), which are those of greater length, followed by, in correlative order, two slightly shorter fixed divisions (7) and finally the two central fixed divisions (9), slightly shorter than the previous ones.

The fixed divisions (4 and 7) are linked to a metal profile hinged section of similar characteristics, by means of known rotation elements (6). As a result the hinged section (5) corresponds to the fixed division (4) and the hinged section (8) to the fixed division (7), section (8) being of greater length than the section (5).

The fixed divisions (9) located in the central part are not disposed with rotation elements. This is because their corresponding sections (10) are longer than the hinged sections (5 and 8) and cannot therefore be hinged because they would then interfere in the hinging of the rest of the components, thus being housed as a result in pivots (11).

The pivots (11) are disposed with a quick connector (12) that enables linking between the fixed divisions (9) and the sections (10).

The hinged sections (5 and 8) and the section (10) are disposed with a pair of feet (13) with their corresponding anchoring ties (14).

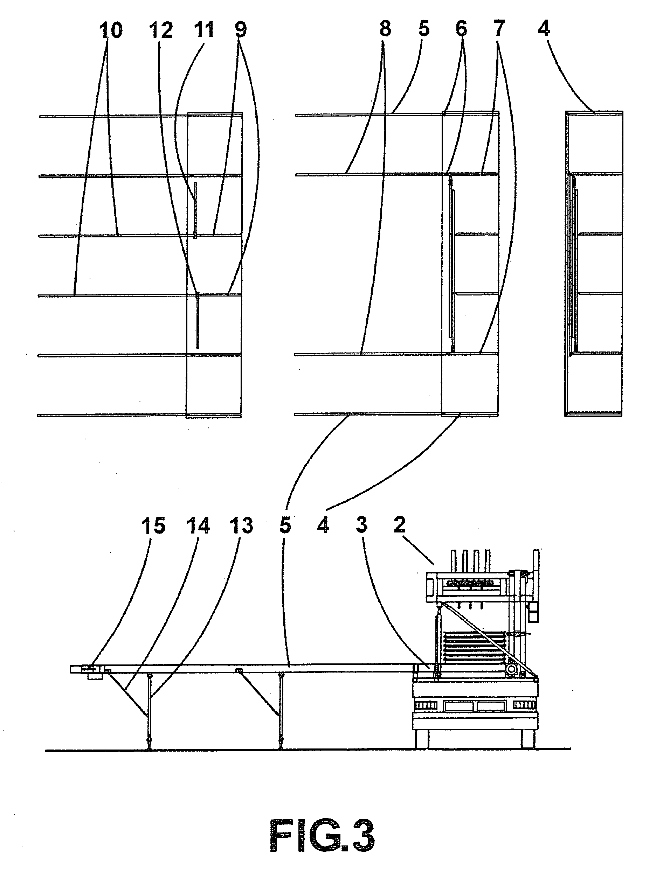

The same operations are conducted on the platform (2) simultaneously so that both structures can be linked at their central part by means of a quick connector (15), as shown in figures 2 and 3.

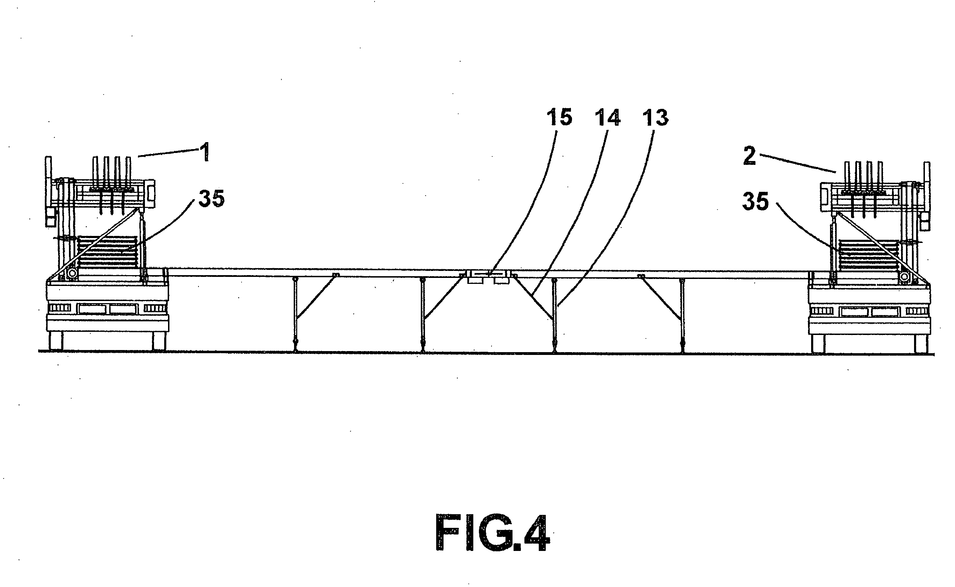

Figure 4 shows the complete assembly of the platforms (1 and 2) with the folding structure assembled and linked together by the quick connectors (15).

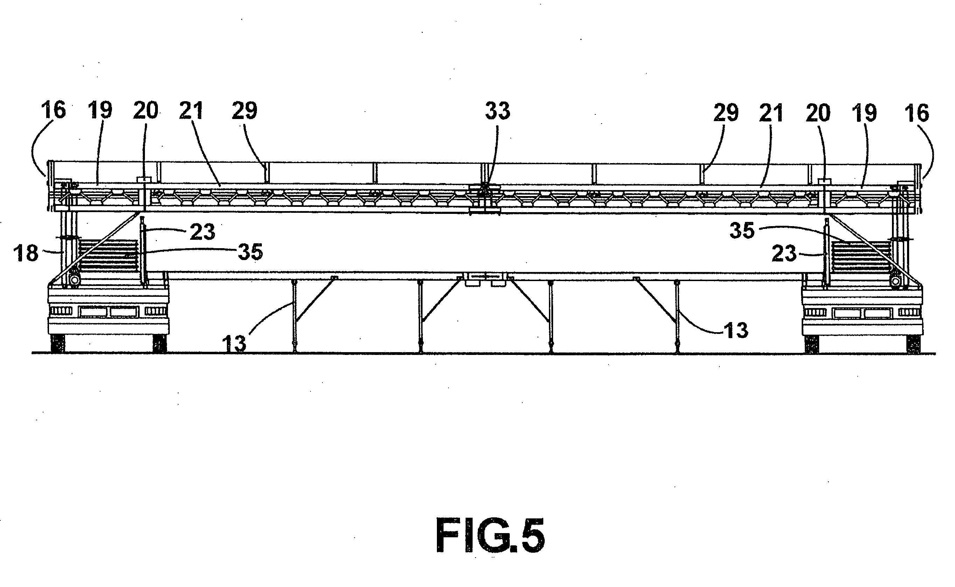

Figure 5 shows both platforms with the top structure assembled with the side friezes connected to each other.

This structure is disposed with a compact frieze (16) acting as a small roof and a frieze with a rectangular structure (17) attached as a reinforcement on its internal face, located all the way along the length of the external part of the platform (1 and 2), supported by raising/lowering scissors (18).

This side frieze structure is linked to a section of rectangular frieze (19) at both ends, which is disposed with a linking hinge (20) for the hinging of a straight section (21) of rectangular frieze that forms, with its unfolding, the top structure.

The smaller frieze (19), equivalent to the width of the platform, is disposed with a telescopic tie (22) and hydraulic cylinders (23) that secure its position on the platform during transport.

The compact frieze (16) is essentially made up of a metallic structure consisting of two opposing welded profiles (23) housing in their interior a plurality of brackets (24) distributed at an equal distance both at the top and the bottom.

The support and the connection of the frieze (16) are made up of a large number of metal section ties (25), welded to the brackets in a continuous sequence to form a compact structure.

The frieze (16) incorporates on its rear length a section of rectangular frieze (17), which is made up of two opposing welded profiles (23) housing in their interior a plurality of brackets (24) distributed at an equal distance both at the top and the bottom.

The support and the connection of the frieze (17) is made up of a large number of metal section ties (25), welded to the brackets in a continuous sequence to form a compact structure, and in its middle part it also incorporates a profile (26) for the sliding of the scissors (18).

The frieze (19) is comprised at the top and bottom by two opposing welded profiles (23) that leave between them a slight gap, both profiles being linked together by a plurality of small T sections (27) distributed at an equal distance and situated on the internal wall of the structure and connected together by metal profile ties (34), the exterior being reinforced by small sections of flat rectangular plate (28) distributed at an equal distance and situated on the external wall of the profiles (23).

The sections of frieze (19) incorporate on their free ends a hinge (20) that links the sections (19 and 21), the hinge (20) being a conventional hinge system used in this structure.

The frieze section (21) is comprised at the top and bottom by two opposing welded profiles (23) that leave between them a slight gap, both profiles being linked together by a plurality of small T sections (27) distributed at an equal distance and situated on the internal wall of the structure and connected together by metal profile ties (34), the exterior being reinforced by small sections of flat rectangular plate (28) distributed at an equal distance and situated on the external wall of the profiles (23).

The fixed ends of the frieze (19) are disposed with a small column (49) that fasten in place some trusses (29) that, once unfolded, form the roof of the stage system.

The trusses (29) are flat structures formed by rectangular or tubular profiles and with dimensions similar to the length of the platform, which are housed during transport in this small section of frieze (19), being disposed with a commercial bearings system (30) that slides along a guide (31) disposed approximately halfway along the frieze (19 and 21). The profiles that make up the friezes incorporate on their external face fastening ties (51) for coupling the different elements that can be coupled to the structure.

At its free end the frieze (21) is disposed with supports (32) for linking with the other unfolded half of the opposing platform.

The link is formed by a quick connector (33) that is used to maintain the entire top structure and as a support securing the trusses (29) in place.

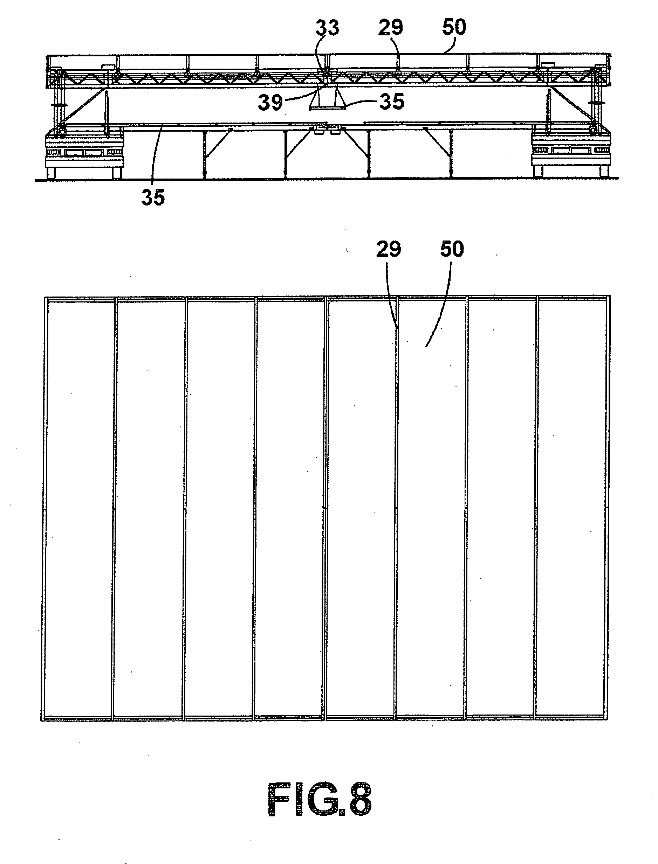

Once the top structure has been unfolded and assembled, the flooring must be put together to complete the stage system, as shown in Figure 8.

The flooring is made up of various rectangular sheets (35), situated and stacked on top of the first sheet fixed onto the platform and disposed on the entire length of the platform.

It is a frame consisting of two side profiles (36) along its entire length, the rectangle being closed by enclosing plates (37), the internal hole being occupied by a board (38), preferably of wood.

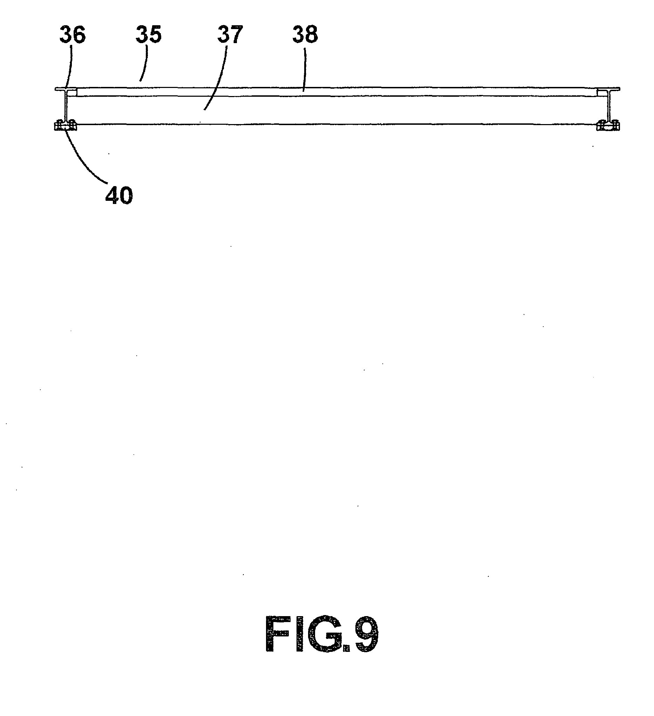

They are installed on the metallic base structure by a hoist (39) that is used to move them from the pile where they are stacked and deposit them on the structure. The sheets (35) are fastened into place by linking elements (40), as shown in Figure 9.

Once the assembly of the stage system flooring has been completed, all types of accessories such as lights, speakers, modules, etc. can be connected and coupled onto the structure.

In this position and without yet raising the structure, the trusses (29) are slid along both sides at the same time and towards the centre to form the roof.

In this position this operation can be easily carried out from the flooring, and all the ties can be tightened comfortably to form a solid and safe roof, the canvas (50) being tightened in the process.

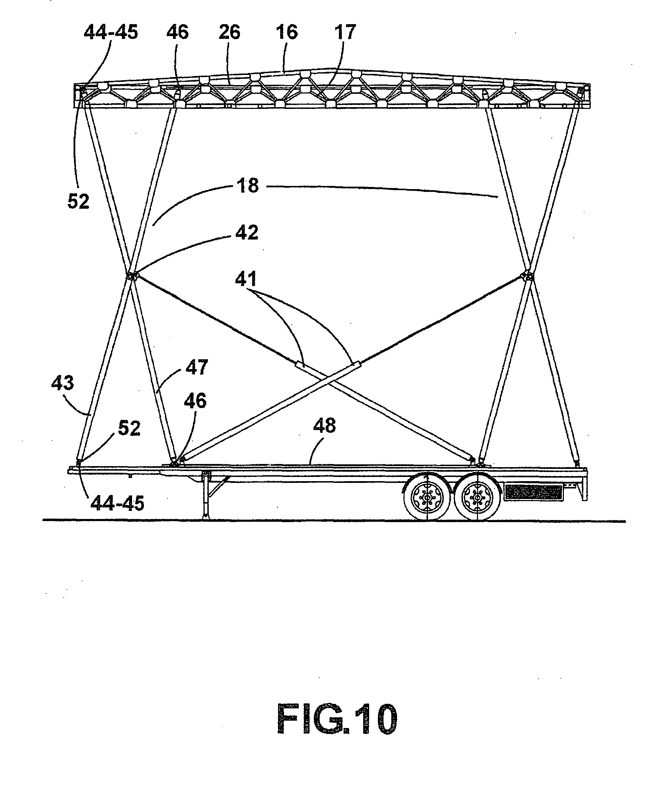

Finally, both structures are lifted at the same time, as shown in Figure 10, using the scissors (18) powered by the hydraulic cylinders (41).

The scissors (18) are formed by rectangular profile sections linked at the middle by a commercial-type rotating pin (42) and located at the bottom part on the platform, their position being fixed by the end (43) by means of a tab (44) secured in place by fixing elements (45), rotation being enabled by a pin (52), with the opposing end being fixed onto a commercial bearings system (46) that moves along the guide (26).

The position of the end (47) is fixed onto a tab (44), located on the frieze (17), its rotation being permitted by a pin (52), with the bottom end being fixed onto a commercial bearings system (46) that moves along the bottom guide (48).

It was decided to omit a detailed description of the other particular features of the invention disclosed herein or of the components forming part of it, as it was felt that the rest of said particular features are not the object of any claims.

Having described the nature of the present invention in sufficient detail, in addition to the means for putting it into practice, all that remains to be added is that its description is not restrictive, and that variations both in materials and forms and sizes can be made provided that said variations do not alter the essential nature of the characteristics claimed below.

## Claims

1. - Mobile stage system of the type used for any type of public event such as festivities, concerts, plays, meetings or conferences, **characterised in that** it consists of two platforms (1 and 2) equal and opposing and on wheels that, in order to transport it are connected directly to the tractor unit of a truck by means of the fifth wheel, all of which can easily be connected together when the folding structure is unfolded, forming a large stage system, provided with a scissors system for raising/lowering the structure, folding roof and fastening means for accessories.

2. - Mobile stage system according to the preceding claim,
wherein the platforms (1 and 2) are disposed with a cavity (3), located between the fixed platform and the chassis of the platform itself, made up of six fixed metallic profile divisions, of different sizes and distributed at equidistant distances and located at both ends, two fixed divisions (4), which are those of greater length, followed by, in correlative order, two slightly shorter fixed divisions (7) and finally the two central fixed divisions (9), slightly shorter than the previous ones.

3. - Mobile stage system according to claim 2, wherein the fixed divisions (4 and 7) are linked to a metal profile hinge section of similar characteristics, by means of known rotation elements (6). As a result the hinged section (5) corresponds to the fixed division (4) and the hinged section (8) to the fixed division (7), the hinged section (8) being of greater length than the section (5).

4. - Mobile stage system according to claims 2 and 3, wherein the fixed divisions (9) located in the central part are not disposed with rotation elements. This is because their corresponding sections (10) are longer than the hinged sections (5 and 8) and cannot therefore be hinged because they would then interfere in the folding of the rest of the components, thus being housed as a result in pivots (11), which are disposed with a quick connector (12) that enables linking between the fixed divisions (9) and the sections (10).

5. - Mobile stage system according to claims 2, 3 and 4 wherein the hinged sections (5 and 8) and the section (10) are disposed with a pair of feet (13) with their corresponding anchoring ties (14) fitted on their ends with a quick connector (15) that enables linking between both opposing platforms.

6. - Mobile stage system according to claim 1 wherein the folding structure is disposed with a compact frieze (16) acting as a small roof and a frieze with a rectangular structure (17) attached as a reinforcement on its internal face, located all the way along the length of the external part of the platform (1 and 2), supported by raising/lowering scissors (18), connected to a section of rectangular frieze (19) at both ends, which is disposed with a linking hinge (20) for the hinging of a straight section (21) of rectangular frieze that forms with its unfolding the top structure, its position during transport being secured by means of telescopic ties (22) and hydraulic cylinders (23).

7. - Mobile stage system according to claim 6 wherein the compact frieze (16) is made up of a metallic structure consisting of opposing, welded profiles (23) housing in its interior a plurality of brackets (24) distributed at an equal distance both at the top and the bottom, linked together by means of metal profile ties (25).

8. - Mobile stage system according to claims 6 and 7, wherein the rectangular frieze (17) is made up of two opposing, welded profiles (23) housing in its interior a plurality of brackets (24) distributed at an equal distance both at the top and the bottom, linked together by means of metal profile ties (25), incorporating at the top a slide guide (26).

9. - Mobile stage system according to claims 6, 7 and 8, wherein the frieze (19) is comprised at the top and bottom by two opposing welded profiles (23) that leave between them a slight gap, both profiles being linked together by a plurality of small T sections (27) distributed at an equal distance and situated on the internal wall of the structure and connected together by metal profile ties (34), the exterior being reinforced by small sections of flat rectangular plate (28) distributed at an equal distance and situated on the external wall of the profiles (23), the ends being disposed with a small fastening column (49), fastening ties (51) and a guide profile (31) located in the middle part all along its length.

10. - Mobile stage system according to claims 6, 7, 8 and 9, wherein the frieze (21) is comprised at the top and bottom by two opposing welded profiles (23) that leave between them a slight gap, both profiles being linked together by a plurality of small T sections (27) distributed at an equal distance and situated on the internal wall of the structure and connected together by metal profile ties (34), the exterior being reinforced by small sections of flat rectangular plate (28) distributed at an equal distance and situated on the external wall of the profiles (23), the ends being disposed with linking supports (32), fastening ties (51) and a guide profile (31) located in the middle part all along its length.

11. - Mobile stage system according to claims 6, 7, 8, 9 and 10, wherein the structure of friezes (16, 17, 19 and 21) of the platform (1) are attached to the platform (2) by means of quick connectors (33).

12. - Mobile stage system according to claim 1, wherein the top structure is disposed with a plurality of trusses (29) that move by means of bearings (30) housed in the guide (31) located in the middle part of the friezes (19 and 21).

13. - Mobile stage system according to claim 12, wherein the trusses (29) are flat structures formed by rectangular or tubular profiles, enveloped in a waterproof material or canvas (50), of dimensions similar to the length of the platform that is housed during transport in the frieze length (19), and extended to form the roof of the mobile stage system, attached to the small column (49).

14. - Mobile stage system according to claim 1, wherein the flooring of the stage system is made up of various rectangular sheets (35), and during transport situated and stacked on top of the first sheet fixed onto the platform (1 - 2), and disposed all along its length, being installed by a hoist (39) that slides along the top structure, and secured to the metallic base structure by linking elements (40).

15. - Mobile stage system according to claim 14, wherein the sheets (35) are made up of two side profiles (36) along its entire length, the rectangle being closed by enclosing plates (37), the internal hole being occupied by a board (38), preferably of wood.

16. - Mobile stage system according to claim 1, wherein both structures are lifted at the same time using the scissors (18) powered by the hydraulic cylinders (41).

17. - Mobile stage system according to claim 16, wherein the scissors (18) are formed by rectangular profiles linked at the middle by a commercial-type rotating pin (42) and located at the bottom part on the platform, their position being fixed by the section (43) by means of a tab (44) secured in place by fixing elements (45), rotation being enabled by a pin (52), with the opposing end being fixed onto a commercial bearings system (46) that moves along the guide (26).

18. - Mobile stage system according to claims 16 and 17, wherein the position of the section (47) is fixed onto a tab (44), located on the frieze (17), its rotation being permitted by a pin (52), with the bottom end being fixed onto a commercial bearings system (46) that moves along the bottom guide (48), connected to the platform.
